# EUROPEAN PATENT APPLICATION

(11) **EP 3 950 333 A1**
(43) Date of publication of application: **09.02.2022**
(21) Application number: 20784448.1
(22) Date of filing: 05.03.2020
(51) Int. Cl.: B32B 27/08, B32B 27/30, B32B 7/023, B32B 7/022, B32B 27/18, B32B 37/15, B32B 15/18, B32B 15/09, B32B 15/20

(54) **FLUORINE-CONTAINING SHEET AND LAMINATED STEEL SHEET COMPRISING SAME**

(30) Priority: 05.04.2019 KR 20190040148
(71) Applicant: SKC eco-solutions Co., Ltd., Chungcheongbuk-do 27818 (KR)
(72) Inventor: LEE, Seokin, Jincheon-gun, Chungcheongbuk-do 27818 (KR); HAN, Kweon Hyung, Jincheon-gun, Chungcheongbuk-do 27818 (KR)
(74) Representative: Dehns
(86) International application number: PCT/KR2020/003087
(87) International publication number: WO 2020/204370

(57) **Abstract**

A sheet according to an embodiment comprises an acrylic resin layer and a fluorinated polymer resin layer, and has an ultraviolet transmittance spectrum with a controlled shape so as to have weather resistance that inhibits discoloration and deformation caused by heat, moisture and UV rays and also have excellent formability. Therefore, the sheet can be applied to construction interior/exterior materials, particularly, to a laminated steel sheet or a decorative sheet for window frames.

## Description

### Technical Field

Embodiments relate to a fluorine-containing sheet for the application to interior/exterior construction materials such as a laminated steel sheet and a decorative sheet for window frames. Specifically, the embodiments relate to a sheet comprising an acrylic resin layer and a fluorinated polymer resin layer wherein the light transmittance spectrum is controlled.

### Background Art

Decorative sheets are applied to various interior/exterior construction materials such as window frames and steel sheets. In general, a decorative sheet is thermally bonded to a window frame, a steel sheet, and the like. Thus, it must have high processability, adhesion, and heat resistance. Since it is disposed as the outermost layer, it must have weatherability and corrosion resistance as well.

Laminated steel sheets refer to a product in which various functional film layers are formed on the surface of a steel sheet made of an electro-galvanized steel sheet, a hot-dip galvanized steel sheet, a cold-rolled steel sheet, a stainless steel sheet, a galvalume steel sheet, or an aluminum coil. Such a laminated steel sheet is mainly applied to the exterior cases of home appliances such as refrigerators, washing machines, air conditioners, and the like. It has an advantage of excellent appearance characteristics and excellent processability as compared with the conventional coated steel sheets.

In general, a polyethylene terephthalate (PET) film, a polyvinyl chloride (PVC) film, and the like are used as a protective film on a laminated steel sheet. However, PET films are somewhat poor in UV resistance, processability, and crack resistance, and PVC films are not good in weatherability, chemical resistance, and contamination resistance. Thus, such laminated steel sheets are somewhat inappropriate to be used as interior/exterior construction materials.

In order to improve this, it has been recently attempted to apply a fluorine-containing film having excellent weatherability as a protective film. In general, however, fluorine-containing films are by nature poor in adhesion to other functional films. If a coating layer of a fluorinated polymer resin is formed to solve this problem, an appearance problem such as an uneven orange peel phenomenon occurs due to a solvent that has not yet been evaporated.

In addition, when a functional film such as a protective film is laminated on a steel sheet, high-temperature conditions are required to secure the bonding strength with the steel sheet. In general, however, fluorine-containing films are not good in thermal resistance. Thus, there is a problem that the film is deformed, failing to withstand the high-temperature conditions.

### Disclosure of Invention

### Technical Problem

In the conventional fluorine-containing films, the thickness of each constituent layer and the content of a UV absorbent are adjusted to implement weatherability and processability.

However, the weatherability and processability of a sheet may be affected by other configurations of the sheet in addition to the thickness of each constituent layer and the content of a UV absorbent, which makes it difficult to consistently implement the desired characteristics.

As a result of the research conducted by the present inventors, it has been discovered that if a sheet is composed of an acrylic resin layer and a fluorinated polymer resin layer and the light transmittance spectrum is controlled in the wavelength range of ultraviolet and visible rays, it is possible to provide a sheet having weatherability wherein the discoloration and deformation due to heat, moisture, and UV is suppressed, along with excellent molding processability.

Accordingly, an object of the embodiments is to provide a fluorine-containing sheet having excellent weatherability and molding processability at the same time.

In addition, another object of the embodiments is to provide a laminated steel sheet comprising the above sheet, which has a structure capable of withstanding a high-temperature lamination step while it has weatherability, chemical resistance, and contamination resistance, and a process for preparing the same.

### Solution to Problem

According to an embodiment, there is provided a sheet, which comprises an acrylic resin layer; and a fluorinated polymer resin layer formed on one side of the acrylic resin layer, wherein the integral area of a transmission spectrum curve at a wavelength of 220 nm to 300 nm is 30 to 135.

According to another embodiment, there is provided a laminated steel sheet, which comprises a steel sheet; and a first sheet disposed on the steel sheet, wherein the first sheet comprises an acrylic resin layer; and a fluorinated polymer resin layer formed on one side of the acrylic resin layer, wherein the integral area of a transmission spectrum curve at a wavelength of 220 nm to 300 nm is 30 to 135.

According to still another embodiment, there is provided a process for preparing a laminated steel sheet, which comprises coextruding an acrylic resin layer and a fluorinated polymer resin layer to prepare a first sheet wherein the integral area of a transmission spectrum curve at a wavelength of 220 nm to 300 nm is 30 to 135; laminating the first sheet with a second sheet comprising at least one substrate layer selected from the group consisting of a polyester resin layer, a polyolefin resin layer, a polyvinyl chloride resin layer, and an aluminum foil layer to prepare a composite sheet; and laminating the composite sheet with a steel sheet.

### Advantageous Effects of Invention

The sheet according to the embodiment, which comprises an acrylic resin layer and a fluorinated polymer resin layer, wherein the light transmittance spectrum is controlled, has weatherability wherein the discoloration and deformation due to heat, moisture, and UV is suppressed, along with excellent molding processability.

In addition, since an acrylic resin layer is formed on one side of the fluorinated polymer resin layer, it is possible to compensate for the low adhesion of the fluorinated polymer resin layer.

In addition, in a sheet according to a preferred embodiment, the thickness of each layer, the content of a UV absorbent, and the surface roughness of each layer are controlled, whereby it is possible to implement more excellent weatherability, appearance as interior/exterior construction materials, and stable molding processability.

In addition, the laminated steel sheet according to the embodiment, which comprises a fluorinated polymer resin layer at the outmost, is excellent in weatherability (in particular, UV resistance), chemical resistance, and contamination resistance.

### Brief Description of Drawings

Fig. 1 shows the integral area of a transmission spectrum curve at a wavelength of 220 nm to 300 nm of the sheet according to one embodiment.
Fig. 2 shows UV-Vis transmission spectrum curves of the sheets of the Examples and Comparative Examples.
Fig. 3 shows the layer configuration of the laminated steel sheet according to one embodiment.
Figs. 4a and 4b show a process of preparing a laminated steel sheet according to one embodiment.
Fig. 5 shows an exemplified process for preparing a first sheet by coextrusion.

**<Reference Numerals of the Drawings>**

| | | | |
|---|---|---|---|
| 10: | laminated steel sheet | 11: | composite sheet |
| 20: | extruder | 100: | first sheet |
| 110: | fluorinated polymer resin layer | | |
| 120: | acrylic resin layer | | |
| 200: | second sheet | 210: | adhesive layer |
| 220: | functional layer (printing layer, color layer, pattern layer, aluminum foil layer,or aluminum vapor deposition layer) | | |
| | | | |
| 230: | substrate layer (polyester resin layer, polyolefin resin layer, polyvinyl chlorideresin layer, or aluminum foil layer) | | |
| | | | |
| 310: | adhesive layer | 320: | undercoat layer |
| 330: | pretreatment layer | | |
| 340: | steel sheet (such as hot-dip galvanized steel sheet) | | |

### Best Mode for Carrying Out the Invention

Throughout the description of the embodiments, in the case where each layer, sheet, film, or the like is mentioned to be formed "on" or "under" another layer, sheet, film, or the like, it means not only that one element is "directly" formed on or under another element, but also that one element is "indirectly" formed "on" or "under" another element with other element(s) interposed between them.

In addition, the term on or under with respect to each element may be referenced to the drawings. For the sake of description, the sizes of individual elements in the appended drawings may be exaggeratedly depicted and do not indicate the actual sizes.

In addition, all numerical ranges related to the quantities of physical properties, dimensions, and the like of a component used herein are to be understood as being modified by the term "about," unless otherwise indicated.

### [Sheet]

The sheet according to an embodiment comprises an acrylic resin layer; and a fluorinated polymer resin layer formed on one side of the acrylic resin layer, wherein the integral area of a transmission spectrum curve at a wavelength of 220 nm to 300 nm is 30 to 135.

### Acrylic resin layer

The acrylic resin layer comprises 50% by weight or more, 70% by weight or more, or 90% by weight or more, of an acrylic resin.

The acrylic resin may be, for example, a poly(methyl methacrylate) (PMMA) resin. Hence, the acrylic resin layer may be a PMMA resin layer, that is, a PMMA film.

The PMMA resin may be a homopolymer of a methyl methacrylate (MMA) monomer or a copolymer thereof with other comonomers. When the PMMA resin is a copolymer, it is preferably a polymer in which MMA and a comonomer are copolymerized at a weight ratio of 50:50 to 99:1.

Examples of the comonomer that can be copolymerized with MMA include alkyl (meth)acrylate, acrylonitrile, butadiene, styrene, isoprene, and mixtures thereof. Preferred copolymers include those in which methyl acrylate and/or ethyl acrylate as a comonomer are copolymerized in a content of 1% by weight to 20% by weight.

The PMMA resin may be functionalized. For example, it may contain an acid, acid chloride, alcohol, or anhydride functional group, and this functional group may be introduced by grafting or copolymerizing a compound having a functional group. Preferred among the above is an acid functional group provided by an acrylic acid copolymer. The content of the compound having a functional group may be 15% by weight or less based on the weight of the PMMA containing the functional group.

The PMMA resin may have an MVI (melt volume index) of 0.5 g/10 minutes to 10 g/10 minutes when measured at a temperature of 230°C under a load of 3.8 kg.

The acrylic resin layer may further comprise an impact modifier. A core-shell type impact modifier, chlorinated polyolefin, styrene-butadiene rubber (SBR), styrene-butadiene-styrene (SBS), vinyl polyacetate, or the like may be used as the impact modifier.

In addition, the acrylic resin layer may further comprise a UV absorbent.

A benzotriazole-based, benzotriazine-based, or the like may be used as the UV absorbent. Such a UV absorbent may compensate for the low weatherability of the acrylic resin layer.

The content of the UV absorbent may be 0.1% by weight to 10% by weight, 0.5% by weight to 5% by weight, 1.5% by weight to 4.5% by weight, 0.1% by weight to 3.5% by weight, 2.5% by weight to 10% by weight, 2.5% by weight to 5% by weight, 2% by weight to 4% by weight, or 2.5% by weight to 3.5% by weight, based on the weight of the acrylic resin layer.

Specifically, the acrylic resin layer may comprise 2.5% by weight to 3.5% by weight of the UV absorbent. Unlike this, if the content of the UV absorbent is excessively high, it causes an increase in the unit price of the product, and it may vaporize at a high temperature during the sheet molding process, thereby adversely affecting the overall process such as contamination of surrounding equipment. On the other hand, if the content of the UV absorbent is too low, the sheet may have low weatherability, thereby causing discoloration and deformation of the substrate or the like.

### Fluorinated polymer resin layer

The fluorinated polymer resin layer comprises 50% by weight or more, 70% by weight or more, or 90% by weight or more, of a fluorinated polymer resin.

The fluorinated polymer resin may be, for example, a polyvinylidene fluoride (PVdF) resin. Hence, the fluorinated polymer resin layer may be a PVdF resin layer, that is, a PVdF film.

The PVdF resin may be a homopolymer or a copolymer of vinylidene fluoride (VF2). In such event, the copolymer may comprise at least 50% by weight of VF2 and the balanced content of other monomers copolymerizable with VF2.

A fluorinated monomer is preferable as the comonomer copolymerizable with the VF2. Specifically, examples thereof include vinyl fluoride; trifluoroethylene (VF3); chlorotrifluoroethylene (CTFE); 1,2-difluoroethylene; tetrafluoroethylene (TFE); hexafluoropropylene (HFP); perfluoro(alkyl vinyl) ethers such as perfluoro(methyl vinyl) ether (PMVE), perfluoro(ethyl vinyl) ether (PEVE), and perfluoro(propyl vinyl) ether (PPVE); perfluoro(1,3-dioxol); perfluoro(2,2-dimethyl-1,3-dioxole) (PDD); and mixtures thereof. Preferably, the comonomer may be chlorotrifluoroethylene (CTFE), hexafluoropropylene (HFP), trifluoroethylene (VF3), or tetrafluoroethylene (TFE).

The PVdF resin may preferably have a viscosity in the range of 4,000 poise to 12,000 poise when measured at 230°C at a shear rate of 100 s⁻¹ using a rheometer. A PVdF resin having a viscosity in the above range may be more suitable for extrusion and injection molding

The fluorinated polymer resin layer may be disposed as the outermost layer of the laminated steel sheet. Thus, the laminated steel sheet may be very excellent in weatherability (especially, UV resistance), chemical resistance, and contamination resistance.

### Transmission spectrum

In the sheet, the transmission spectrum is controlled to a specific form in the wavelength range of ultraviolet and visible rays.

First, the sheet has a specific form of transmission spectrum in the wavelength range of ultraviolet rays. That is, the sheet has an integral area of a transmission spectrum curve of 30 to 135 at a wavelength of 220 nm to 300 nm.

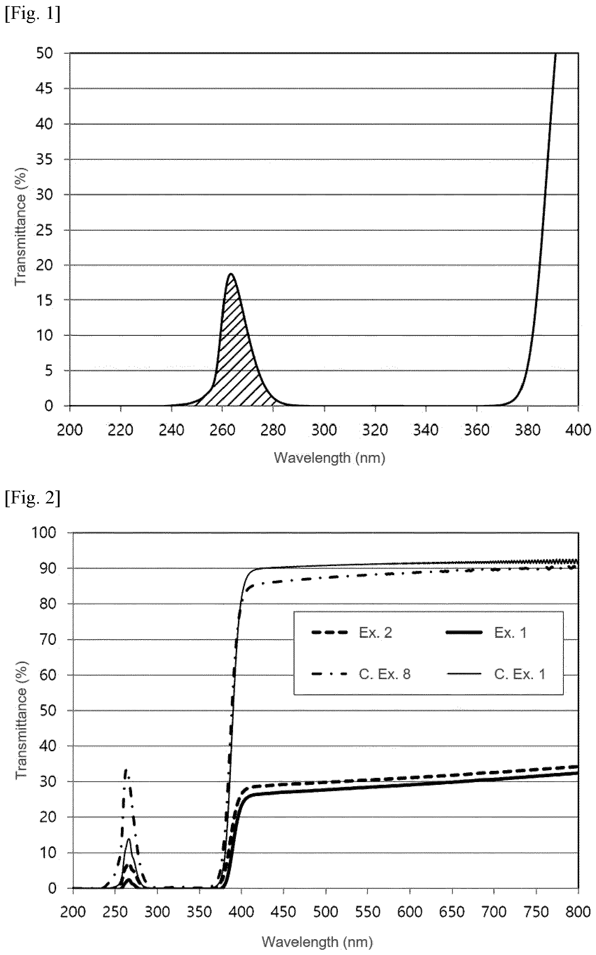

The integral area refers to an area under a curve in a specific wavelength range in a spectrum curve of light transmittance (%) with respect to wavelength (nm) (see the hatched area in Fig. 1). Thus, it can be expressed as a value (nm • %) of the corresponding wavelength range multiplied by the light transmittance.

Within the above range of integral area, it is possible to have optimal weatherability to prevent discoloration and deformation of the substrate due to heat, moisture, and UV and to satisfy the sheet molding processability at the same time. Specifically, if the integral area is less than 30, a large amount of gas is generated during the melt extrusion process, resulting in poor processability. If it exceeds 135, the discoloration and deformation of the substrate due to heat, moisture, and UV occurs.

The integral area may be more variously exemplified in accordance with the desired weatherability and processability. Specifically, the integral area may be 30 to 130, 30 to 120, 30 to 100, 30 to 80, 30 to 60, 50 to 135, 70 to 135, 100 to 135, 50 to 130, 70 to 120, or 70 to 100.

In addition, the sheet may have a light transmittance of 1% to 10%, 1% to 5%, 2% to 8%, 3% to 7%, or 5% to 10%, at a wavelength of 220 nm to 300 nm.

In addition, the sheet may have a transmission spectrum curve having no peak or an insignificant peak, if any, at 320 nm to 340 nm. Thus, the sheet may have a light transmittance of less than 1% at a wavelength of 320 nm to 340 nm.

In addition, the sheet has a specific range of transmittance in the wavelength range of visible light.

In addition, the sheet may have a light transmittance of 10% to 80%, 10% to 60%, 10% to 40%, 20% to 60%, or 20% to 40%, at a wavelength of 380 nm to 800 nm. Specifically, the sheet may have a light transmittance of 20% to 40% at a wavelength of 380 nm to 800 nm. Within the above range, it may be more advantageous for attaching to the surface of other products to impart gloss with less glare for decoration.

In addition, the sheet has a specific form of transmission spectrum in the wavelength range of visible light. For example, the sheet may have an integral area of a transmission spectrum curve of 30,000 or less, for example, 5,000 to 30,000, 5,000 to 20,000, or 10,000 to 20,000, at a wavelength of 380 nm to 800 nm. Within the above range, it may be more advantageous for attaching to the surface of other products to impart gloss with less glare for decoration.

The transmission spectrum in the wavelength range of ultraviolet rays may be measured, for example, using a deuterium lamp. The transmission spectrum in the wavelength range of visible light may be measured, for example, using a halogen lamp.

In addition, the sheet may have a haze of 50% to 75% or 65% to 75%.

### Coextrusion

The sheet may be prepared by coextrusion. That is, the acrylic resin layer and the fluorinated polymer resin layer may be formed by coextrusion.

Thus, the fluorinated polymer resin layer may be directly formed on one side of the acrylic resin layer, so that an adhesive may not be present between the acrylic resin layer and the fluorinated polymer resin layer. When the sheet is prepared by coextrusion as described above, it is possible to implement a much greater interlayer adhesion between the acrylic resin layer and the fluorinated polymer resin layer by virtue of the high compatibility between the molecules in a molten state than the structure in which an adhesive is applied between them.

In addition, when the sheet is prepared by coextrusion, it is possible to eliminate the process step of applying an adhesive and to prevent the deterioration of physical properties due to the adhesive.

In addition, the coextrusion method is environmentally friendly and excellent in workability because no solvent is used as compared with a method of forming each resin layer by applying a raw material resin. It is also possible to use various materials and to implement elegant designs since roughness may be formed on the film surface during the film formation process.

### Physical properties of the sheet

The acrylic resin layer may have a thickness of 10 µm to 50 µm, 10 µm to 30 µm, or 20 µm to 30 µm. The fluorinated polymer resin layer may have a thickness of 3 µm to 15 µm, 5 µm to 12 µm, or 3 µm to 15 µm.

As a specific example, the acrylic resin layer may have a thickness of 25 µm to 45 µm, and the fluorinated polymer resin layer may have a thickness of 5 µm to 8 µm.

The acrylic resin layer may have a surface roughness (Ra) of 0.01 µm to 2.0 µm, 0.1 µm to 1.5 µm, 0.1 µm to 1.0 µm, or 0.4 µm to 1.0 µm. In addition, the fluorinated polymer resin layer may have a surface roughness (Ra) of 0.01 µm to 2.0 µm, 0.1 µm to 1.5 µm, 0.1 µm to 1.0 µm, or 0.4 µm to 1.0 µm.

As a specific example, the acrylic resin layer and the fluorinated polymer resin layer may have a surface roughness (Ra) of 0.4 µm to 1.0 µm.

Since the sheet is prepared at a time by coextrusion, there may be almost no difference in the surface roughness between the two resin layers. For example, the surface roughness (Ra) of the acrylic resin layer and the surface roughness (Ra) of the fluorinated polymer resin layer may have a difference within 0.7 µm, within 0.5 µm, within 0.3 µm, within 0.2 µm, or within 0.1 µm. Specifically, the acrylic resin layer and the fluorinated polymer resin layer may have a difference in the surface roughness (Ra) within 0.3 µm. When the difference in surface roughness between the two resin layers is within the above preferred range, the effect of preventing sheet deformation in a high-temperature lamination process with a steel sheet may be more excellent.

The sheet may have excellent weatherability (in particular, UV resistance).

For example, when the sheet is exposed to UV rays for 2,000 hours, the color difference (ΔE) from the initial state may be within 5.0, within 3.0, within 2.0, or within 1.0. Specifically, the sheet may have a color difference (ΔE) of less than 2.0 when exposed to ultraviolet rays for 2,000 hours.

### [Laminated steel sheet]

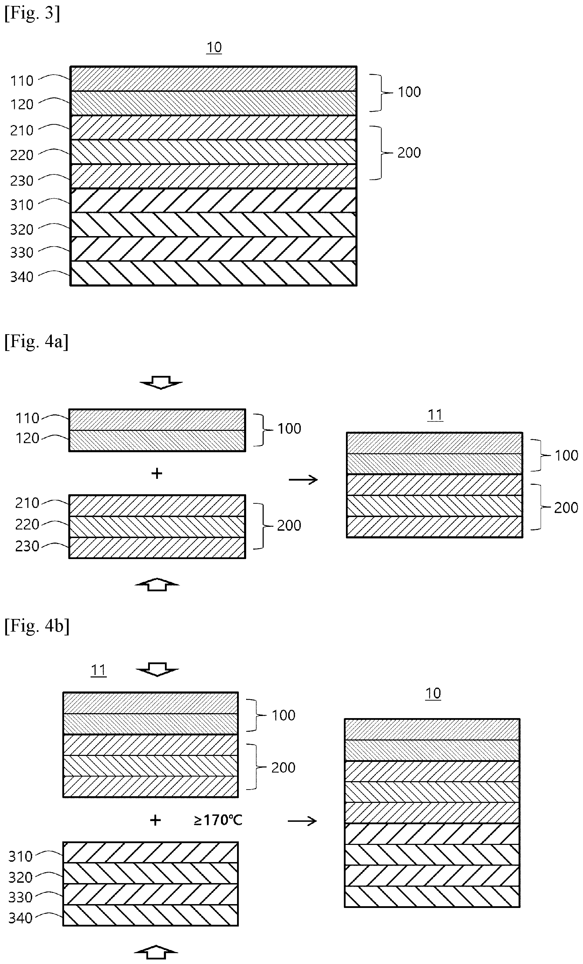

Fig. 3 shows the layer configuration of the laminated steel sheet according to one embodiment.

Referring to Fig. 3, the laminate steel sheet (10) according to an embodiment comprises a steel sheet (340); and a first sheet (100) disposed on the steel plate (340).

The laminate steel sheet (10) according to the embodiment may further comprise a second sheet (200) between the steel sheet (340) and the first sheet (100), wherein the second sheet (200) comprises at least one substrate layer (230) selected from the group consisting of a polyester resin layer, a polyolefin resin layer, a polyvinyl chloride resin layer, and an aluminum foil layer.

### First sheet

The first sheet (100) in the laminated steel sheet has the same configuration and characteristics as those of the sheet according to an embodiment as described above.

Thus, the first sheet (100) comprises an acrylic resin layer (120); and a fluorinated polymer resin layer (110) formed on one side of the acrylic resin layer (120), wherein the integral area of a transmission spectrum curve at a wavelength of 220 nm to 300 nm is 30 to 135.

Since an acrylic resin layer is formed on one side of the fluorinated polymer resin layer as described above, it is possible to compensate for the low adhesion of the fluorinated polymer resin layer.

The first sheet (100) may be prepared by coextrusion. Specifically, the first sheet (100) comprises an acrylic resin layer and a fluorinated polymer resin layer formed by coextruding an acrylic resin and a fluorinated polymer resin.

### Second sheet

The second sheet (200) comprises a substrate layer (230).

The substrate layer (230) may be at least one selected from the group consisting of a polyester resin layer, a polyolefin resin layer, a polyvinyl chloride resin layer, and an aluminum foil layer.

The polyester resin layer may comprise a polyethylene terephthalate (PET) resin, a polyethylene naphthalate (PEN) resin, a copolymerized polyethylene terephthalate (Co-PET), or the like. As a specific example, the polyester resin layer may be a polyethylene terephthalate (PET) resin layer, that is, a PET film. In addition, at least one side of the PET film may be subjected to hairline pattern treatment to enhance the appearance.

The polyolefin resin layer may comprise a polyethylene resin, a polypropylene resin, or the like. As a specific example, the polyolefin resin layer may be a polypropylene resin layer, that is, a PP film.

The polyvinyl chloride resin layer may be, for example, a polyvinyl chloride resin layer of thermal resistance grade specialized for a steel sheet.

The substrate layer may have a thickness in the range of 15 µm to 160 µm. Specifically, the thickness of the polyester resin layer, the polyolefin resin layer, and the polyvinyl chloride resin layer may be in the range of 15 µm to 160 µm.

The aluminum foil may be subjected to hairline pattern treatment on at least one side thereof. The aluminum foil may have a thickness in the range of 18 µm to 30 µm.

In addition, the second sheet (200) may further comprise at least one functional layer (220) formed on at least one side (upper side or lower side) of the substrate layer (230). Specifically, the second sheet may further comprise at least one functional layer selected from the group consisting of a printing layer, a color layer, a pattern layer, an aluminum foil layer, and an aluminum vapor deposition layer on at least one side of the substrate layer. Such a functional layer can improve the appearance by introducing a design, color, pattern, or the like to the laminated steel sheet.

In addition, the second sheet (200) may further comprise an adhesive layer (210) for enhancing the adhesion with the first sheet (100). The adhesive layer (210) may comprise an optically transparent adhesive.

The adhesive may be modified to provide a bonding strength between the first sheet (in particular, the acrylic resin layer) and the second sheet (the functional layer or the substrate layer) or a commercially available one.

### Steel sheet

The steel sheet (340) may comprise an electro-galvanized steel sheet, a hot-dip galvanized steel sheet, a cold-rolled steel sheet, a stainless steel sheet, a galvalume steel sheet, or an aluminum coil.

At least one of a pretreatment layer (330), an undercoat layer (320), and an adhesive layer (310) may be formed on one side of the steel sheet (340).

The pretreatment layer (330) serves to modify the surface of the steel sheet by removing the foreign matters on the surface of the steel sheet to facilitate the process of forming an undercoat layer on the steel sheet.

The undercoat layer (320) may increase the durability of the steel sheet and increase the bonding strength of the interface between the steel sheet and other layers so that the process can be carried out smoothly.

The adhesive layer (310) is for increasing the adhesion with the second sheet (200) and may comprise an optically transparent adhesive.

### Lamination configuration example

According to a specific embodiment, the laminated steel sheet has a structure in which a steel sheet, a pretreatment layer, an undercoat layer, an adhesive layer, a substrate layer, a functional layer, an adhesive layer, an acrylic resin layer, and a fluorinated polymer resin layer are laminated in this order. Here, the substrate layer may be selected from the group consisting of a polyester resin layer, a polyolefin resin layer, a polyvinyl chloride resin layer, and an aluminum foil layer. The functional layer may be selected from the group consisting of a printing layer, a color layer, a pattern layer, an aluminum foil layer, and an aluminum vapor deposition layer.

In addition, in the lamination configuration, the lamination order (that is, the vertical relationship) of the substrate layer and the functional layer may be changed with each other.

### [Process for preparing a laminated steel sheet]

Figs. 4a and 4b show a process of preparing a laminated steel sheet according to one embodiment.

Referring to Figs. 4a and 4b, the process for preparing a laminated steel sheet (10) comprises coextruding an acrylic resin layer and a fluorinated polymer resin layer to prepare a first sheet (100); laminating the first sheet (100) with a second sheet (200) comprising at least one substrate layer (230) selected from the group consisting of a polyester resin layer, a polyolefin resin layer, a polyvinyl chloride resin layer, and an aluminum foil layer to prepare a composite sheet (11); and laminating the composite sheet (11) with a steel sheet (340).

### Preparation of a first sheet (coextrusion)

First, an acrylic resin and a fluorinated polymer resin are coextruded to prepare a first sheet (100).

A fluorinated polymer resin layer (110) and an acrylic resin layer (120) may be integrally formed by the coextrusion without a separate adhesive or a high-temperature lamination process.

Unlike this, if an adhesive is used, the adhesive may permeate into the sheet, thereby causing a problem of deteriorating the optical properties such as reflectance. If a high-temperature lamination process is adopted, there may be a problem that the physical properties of the sheet are deteriorated. In addition, if an adhesive or a high-temperature lamination process is used, separate additional steps are required, which is not preferable in terms of cost.

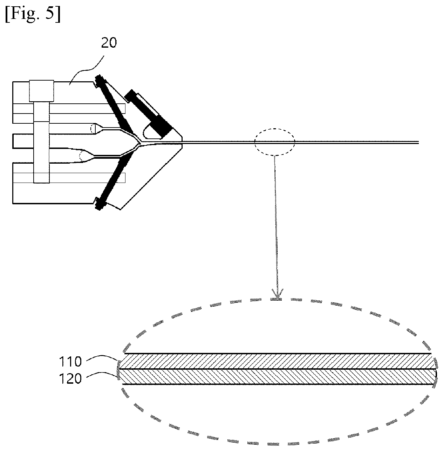

Fig. 5 shows an exemplified process for preparing the first sheet by coextrusion.

Referring to Fig. 5, an acrylic resin and a fluorinated polymer resin are simultaneously extruded through two extruders or an extruder (20) provided with two nozzles to prepare a first sheet in which two resin layers (110 and 120) are integrally bonded in a molten state.

A method using a tubular or a die may be used in the coextrusion. Here, the die is preferably a flat die (e.g., a T die, a coat hanger die, and the like), a straight die, and a circular die (e.g., a crosshead die and the like) for a feed block type, and a manifold type, or the like. But it is not limited thereto.

The extruder that can be used in the present invention may be a single- or multi-screw extruder, as well as a tandem extruder composed of multiple extruders. In addition, a motionless mixer or an equivalent device is inserted into an adapter that allows the extruder to connect to the die to maintain a uniform resin temperature.

### Lamination with a second sheet (preparation of a composite sheet)

Next, the first sheet (100) is laminated with a second sheet (200) comprising a substrate layer (230) to prepare a composite sheet (11).

The lamination of the first sheet and the second sheet may be carried out by a conventional lamination process.

The lamination of the first sheet and the second sheet may be carried out at a temperature of 60°C to 160°C. Specifically, the temperature for the lamination of the first sheet and the second sheet is 60°C to 90°C or 150°C to 160°C.

In addition, when the first sheet and the second sheet are laminated, they may also be subjected to surface embossing for the purpose of improving the appearance.

### Lamination with a steel sheet (high-temperature lamination)

Thereafter, the composite sheet (11) is laminated with a steel sheet (340).

A high-temperature lamination process is required in order to bond the composite sheet with a rigid steel sheet. For example, the lamination of the composite sheet and the steel sheet may be carried out at a temperature of 150°C or higher, 170°C or higher, or 200°C or higher. More specifically, the lamination of the composite sheet and the steel sheet may be carried out at a temperature of 150°C to 300°C or 170°C to 230°C.

For example, the lamination of the composite sheet and the steel sheet may be carried out by passing them between a steel roll and a rubber roll capable of temperature control. The pressure of lamination may range from 1 kgf/m² to 10 kgf/m². Then, a cooling step ensues.

In addition, the lamination of the composite sheet and the steel sheet may be carried out once at least one of a pretreatment layer, an undercoat layer, and an adhesive layer has been formed on one side of the steel sheet in order to enhance the adhesion between layers, coating film hardness, corrosion resistance, and chemical resistance. For example, it may be carried out once an adhesive has been applied to the steel sheet.

According to the process of the embodiment, since a substrate layer having excellent thermal resistance is interposed between the fluorinated polymer resin layer and the steel sheet, it is possible to prevent the fluorinated polymer resin layer having insufficient thermal resistance from being deformed in a high-temperature lamination process.

In addition, according to the process of the embodiment, since the acrylic resin layer and the fluorinated polymer resin layer are laminated by coextrusion, no separate adhesive is required between them. In addition, since the coextruded sheet has almost no difference in the surface roughness, it is possible to securely suppress the deformation at high temperatures.

### Mode for the Invention

Hereinafter, the present invention is explained in detail by the following examples. However, the scope of the present invention is not limited thereto only.

### Example 1: Preparation of a coextrusion sheet of PVdF/PMMA

100 parts by weight of a homo-PVdF resin (Kynar720, Arkema) was used as a raw material for a PVdF resin layer, and 97 parts by weight of a modified PMMA resin (SKC Eco Solutions) with 3 parts by weight of a benzotriazole-based UV absorbent was used as a raw material for a PMMA resin layer. They were each compounded in a twin-screw kneader at a temperature of 230°C to prepare respective pellets thereof.

The pellets of the raw materials of the PVdF resin layer and the PMMA resin layer thus prepared were each fed to a 65 mm single-screw first extruder and a 90 mm single-screw second extruder, melt kneaded at about 230°C, and coextruded through a two-layer feed block type T-die to a PVdF/PMMA resin layer. In such event, the discharged coextrusion sheet was passed between a heating roll and an embossed rubber roll to enhance the gripping force on the heating roll and to impart a surface roughness to the coextrusion melt.

The coextruded sheet had a total thickness of 50 µm, in which the thickness of the PVdF resin layer was 5 µm, and the thickness of the PMMA resin layer was 45 µm.

### Examples 2 to 4: Preparation of a coextrusion sheet of PVdF/PMMA

The same procedure as in Example 1 was repeated, except that the thicknesses of the PVdF resin layer and of the PMMA resin layer as the sheet raw materials and the content of the UV absorbent were changed as shown in Table 1 below to prepare a PVdF/PMMA coextrusion sheet.

### Comparative Example 1: Preparation of a single sheet of PMMA

A composition in which 2 parts by weight of a benzotriazole-based UV absorbent was added to 98 parts by weight of a modified PMMA resin (SKC Eco Solutions) was compounded in a twin-screw kneader at a temperature of 230°C to prepare pellets. The pellets thus prepared were fed to a 65 mm single-screw extruder, melt kneaded at about 230°C, and extruded through a T-die to obtain a PMMA sheet. In such event, the discharged sheet was passed between a heating roll and a mirrored rubber roll to enhance the gripping force on the heating roll and to impart a surface roughness to the extrusion melt. The extruded PMMA sheet had a thickness of 53 µm.

### Comparative Example 2: Preparation of a single sheet of PVdF

A composition in which 3 parts by weight of a benzotriazole-based UV absorbent was added to 97 parts by weight of a homo-PVdF resin (Kynar720, Arkema) was compounded in a twin-screw kneader at a temperature of 230°C to prepare pellets. The pellets thus prepared were fed to a 65 mm single-screw extruder, melt kneaded at about 230°C, and extruded through a T-die to obtain a PVdF sheet. In such event, the discharged sheet was passed between a heating roll and a mirrored rubber roll to enhance the gripping force on the heating roll and to impart a surface roughness to the extrusion melt. The extruded PVdF sheet had a thickness of 30 µm.

### Comparative Examples 3 to 9: Preparation of a coextrusion sheet of PVdF/PMMA

The same procedure as in Example 1 was repeated, except that the thicknesses of the PVdF resin layer and of the PMMA resin layer as the sheet raw materials and the content of the UV absorbent were changed as shown in Table 1 below to prepare a PVdF/PMMA coextrusion sheet.

The sheet composition of the Examples and Comparative Examples and the integral area of the UV-Vis transmission spectrum curves are shown in Table 1.

**[Table 1]**

| | Layer thickness (µm) | | UV absorbent^{∗} (wt. %) | Integral area^{∗∗} (220 to 300 nm) | Integral area^{∗∗} (380 to 800 nm) |
|---|---|---|---|---|---|
| | PVdF | PMMA | | | |
| Ex. 1 | 5 | 45 | 3 | 34.7 | 11913 |
| Ex. 2 | 8 | 25 | 3 | 126.3 | 12813 |
| Ex. 3 | 8 | 45 | 3 | 31.5 | 13140 |
| Ex. 4 | 5 | 25 | 3 | 134.4 | 12514 |
| C. Ex. 1 | - | 53 | 2 | 193.6 | 37371 |
| C. Ex. 2 | 30 | - | 3 | 150.2 | - |
| C. Ex. 3 | 3 | 45 | 1 | 220.6 | 36821 |
| C. Ex. 4 | 3 | 25 | 1 | 610.2 | 36721 |
| C. Ex. 5 | 3 | 25 | 3 | 140.2 | 36123 |
| C. Ex. 6 | 5 | 45 | 2 | 104.1 | 37002 |
| C. Ex. 7 | 5 | 45 | 4 | 9.6 | 37343 |
| C. Ex. 8 | 5 | 25 | 2 | 280.4 | 36893 |
| C. Ex. 9 | 5 | 25 | 4 | 32.4 | 36359 |
| ^{∗} Content of the UV absorbent based on the weight of the PMMA resin layer (% by weight) | | | | | |
| ^{∗∗} Integral area under the UV-Vis transmission spectrum curve at 220 to 300 nm | | | | | |
| ^{∗∗∗} Integral area under the UV-Vis transmission spectrum curve at 380 to 800 nm | | | | | |

In addition, the UV-Vis transmission spectrum curves of the sheets of the Examples and Comparative Examples are shown in Fig. 2.

### Test Example

For the sheet samples obtained in the Examples and Comparative Examples, the following items were evaluated, and the results are shown in Table 2.

### (1) Weatherability

A PET film and the sheet sample were sequentially adhered onto an aluminum foil to obtain a laminate. The CIE L^{∗}a^{∗}b^{∗} color coordinates of the initial layer were measured, and the CIE L^{∗}a^{∗}b^{∗} color coordinates were measured after irradiation with UV rays for 2,000 hours to obtain a color difference (△E = ((L - L₀)² + (a - a₀)² + (b - b₀)²)^(1/2)). The ultraviolet irradiation was carried out in a xenon test chamber (Weather-Omether^{™}, ATLAS) at an exposure dose of 0.35 W/m², a temperature of 60°C under a black panel. The cycle of standing for 108 minutes under a xenon arc lamp and then standing for 12 minutes under a xenon arc lamp and water spray was repeated. If the color difference (ΔE) is 2.0 or less, it was determined to be good.

### (2) Chemical resistance (solvent resistance)

Methyl ethyl ketone (MEK) was applied dropwise to the sample surface, which was kept at 25°C for 24 hours to observe the appearance.

### (3) Gas generation

The amount of gas generated and the degree of contamination were observed when the two-layer coextrusion sheet was discharged from the coextrusion die during the preparation of the sheet sample.

### (4) Surface appearance

The sheet sample was exposed in an oven at 80°C for one week, and it was then observed whether the additive eluted on the surface.

**[Table 2]**

| | △E | Chemical resistance | Gas generation | Surface appearance |
|---|---|---|---|---|
| Ex. 1 | 0.72 | Good | Good | Good |
| Ex. 2 | 1.43 | Good | Good | Good |
| Ex. 3 | 0.62 | Good | Good | Good |
| Ex. 4 | 1.74 | Good | Good | Good |
| C. Ex. 1 | 2.56 | Poor surface | Good | Good |
| C. Ex. 2 | 12.3 | Good | Good | Surface elution |
| C. Ex. 3 | 3.9 | Microcracks | Good | Good |
| C. Ex. 4 | 4.8 | Microcracks | Good | Good |
| C. Ex. 5 | 2.13 | Microcracks | Good | Good |
| C. Ex. 6 | 2.33 | Good | Good | Good |
| C. Ex. 7 | 0.34 | Good | Generated a lot | Good |
| C. Ex. 8 | 3.36 | Good | Good | Good |
| C. Ex. 9 | 0.78 | Good | Generated a lot | Good |

As shown in Tables 1 and 2 and Figure 2, the integral area of the transmission spectrum curve in the sheets of Examples 1 to 4 was controlled to a range of 30 to 135 at a wavelength of 220 to 300 nm. Thus, the color difference was as low as less than 2.0 even after ultraviolet irradiation, the chemical resistance and surface appearance were good, and the gas generation was low in the preparation process.

In contrast, the integral area of the transmission spectrum curve in the sheets of Comparative Examples 1 to 9 fell outside the range of 30 to 135 at a wavelength of 220 to 300 nm. Thus, the color difference was 2.0 or more after ultraviolet irradiation, the chemical resistance and surface appearance were poor, or the gas generation was high in the preparation process.

## Claims

1. A sheet, which comprises an acrylic resin layer; and a fluorinated polymer resin layer formed on one side of the acrylic resin layer, wherein the integral area of a transmission spectrum curve at a wavelength of 220 nm to 300 nm is 30 to 135.

2. The sheet of claim 1, which has a light transmittance of less than 1% at a wavelength of 320 nm to 340 nm.

3. The sheet of claim 1, wherein the sheet has a light transmittance of 20% to 40% at a wavelength of 380 nm to 800 nm.

4. The sheet of claim 1, which has a color difference (ΔE) of less than 2.0 when exposed to ultraviolet rays for 2,000 hours.

5. The sheet of claim 1, wherein the acrylic resin layer and the fluorinated polymer resin layer have a surface roughness (Ra) of 0.4 µm to 1.0 µm.

6. The sheet of claim 1, wherein the acrylic resin layer and the fluorinated polymer resin layer have a difference in the surface roughness (Ra) within 0.3 µm.

7. The sheet of claim 1, wherein the acrylic resin layer comprises 2.5% by weight to 3.5% by weight of a UV absorbent.

8. The sheet of claim 1, wherein the acrylic resin layer has a thickness of 25 µm to 45 µm, and the fluorinated polymer resin layer has a thickness of 5 µm to 8 µm.

9. The sheet of claim 1, wherein the acrylic resin layer and the fluorinated polymer resin layer are formed by coextrusion.

10. A laminated steel sheet, which comprises a steel sheet; and a first sheet disposed on the steel sheet, wherein the first sheet comprises an acrylic resin layer; and a fluorinated polymer resin layer formed on one side of the acrylic resin layer, and the integral area of a transmission spectrum curve at a wavelength of 220 nm to 300 nm is 30 to 135.

11. The laminated sheet of claim 10, which comprises a second sheet between the steel sheet and the first sheet, wherein the second sheet comprises at least one substrate layer selected from the group consisting of a polyester resin layer, a polyolefin resin layer, a polyvinyl chloride resin layer, and an aluminum foil layer.

12. The laminated sheet of claim 11, wherein the second sheet comprises at least one functional layer selected from the group consisting of a printing layer, a color layer, a pattern layer, an aluminum foil layer, and an aluminum vapor deposition layer on at least one side of the substrate layer.

13. A process for preparing a laminated steel sheet, which comprises coextruding an acrylic resin layer and a fluorinated polymer resin layer to prepare a first sheet wherein the integral area of a transmission spectrum curve at a wavelength of 220 nm to 300 nm is 30 to 135;
laminating the first sheet with a second sheet comprising at least one substrate layer selected from the group consisting of a polyester resin layer, a polyolefin resin layer, a polyvinyl chloride resin layer, and an aluminum foil layer to prepare a composite sheet;
and laminating the composite sheet with a steel sheet.

14. The process of claim 13, wherein the lamination of the composite sheet and the steel sheet is carried out at a temperature of 170°C or higher.
